# EUROPEAN PATENT SPECIFICATION

(11) **EP 0 951 335 B1**
(45) Date of publication and mention of the grant of the patent: **07.05.2003**
(21) Application number: 97912304.9
(22) Date of filing: 14.11.1997
(51) Int. Cl.: B01D 46/52

(54) **AIR FILTER**
LUFTFILTER
FILTRATION D'AIR

(30) Priority: 14.11.1996 DE 19647074; 14.11.1996 DE 19647043
(43) Date of publication of application: 27.10.1999
(73) Proprietor: Mcleod Russel Holdings PLC, Abingdon, Oxon OX14 1RG (GB)
(72) Inventor: RÖHE, Werner, D-41564 Kaarst (DE); SCHULZ, Rainer, D-45549 Sprockhövel (DE)
(74) Representative: Shaw, Laurence
(86) International application number: GB9703043
(87) International publication number: WO98020961

(56) References cited:
- EP-A- 0 726 389
- DE-A- 2 739 815
- FR-A- 1 239 451
- GB-A- 1 594 700
- US-A- 3 620 375
- US-A- 4 963 171
- US-A- 5 273 564

## Description

The invention relates to air filtration, for example air conditioning units, ventilating units and the like. One known form of air filter unit comprises a so-called header containing filter cells. The frame is generally trapezoidal as seen in plan, having an open front and a solid relatively smaller rear wall. The side walls are open, and the filter elements or cells are located in the side wall frames; each filter cell is made up of a filter media located with a frame; the element can be made of pleated paper and the frame of cardboard. Each cell is urged against the side wall, and a sealing gasket may be present in between.

US-A-5188646 discloses an air filter which is adjustable. The filter comprises two telescopically engageable frame parts, the outer having a hammerhead projection to slide in a corresponding socket in the inner frame part. This automatically extends into the thickness of the filter panel within the frame. There is no suggestion that parts of the filter are replaceable. To replace the filter it is necessary to separate the telescopic parts of the frame to gain access to the panel.

US-A-5273564 discloses an air filter made of a one piece frame to receive pleated filter media. The frame is moulded of plastics to have four side walls each connected by a living hinge to the main frame body. To replace the filter media it is necessary to open out all four sides to gain access to the media.

In one aspect the invention provides an air filter unit comprising a filter element inserted in a holding frame facing the side surfaces of the filter element, the holding frame being provided with one or more projections which extend substantially continuously in a longitudinal direction of the associated side surfaces and taper from their base towards the filter element, the projections being arranged to engage with the side surfaces by penetrating into the filter element to form a seal between the holding frame and the filter element, the holding frame further comprising on its outer side supporting elements which extend in the form of longitudinal grooves adapted to co-operate with correspondingly shaped catch elements of a filter housing into which the filter unit is insertable.

Such an air filter allows a secure joint to be made between the housing and the holding frame with little assembly effort. This is achieved by providing the housing with catch elements, which engage with correspondingly designed detents or element on the holding frame.

The projections into the side surfaces of the filter element to provide a good seal. Together with the filter element, the projections form a barrier which prevents the unfiltered atmosphere from reaching the clean air side. The assembly of the filter element and its holding frame is simple and no additional sealing means are needed at the points where the projections engage with the filter element. Since no adhesive joint is needed between the filter element and its holding frame, these two components can also be easily separated and recycled separately.

In one preferred embodiment of the invention, there is provided a unit wherein the filter element consists of a flat sheet section folded transversely to its length to form individual filter laminations joined together after folding by means of lines of adhesive that extend in the longitudinal direction of the sheet section prior to folding the sheet, and the lines of adhesive are positioned at the edges of the filter element and are in sealing contact with the one or more projections. In such a filter, the projection can extend into the filter element as far as the strip of glue near the edge of the filter element. The distance of the glue strip from the associated end side of the filter element can therefore be made no larger than the height of the projection. At their free ends beyond the glue strip, the individual filter laminations are urged down by the projection and clamped between it and the glue strip. In this way a secure airtight joint between the filter element and its holding frame is achieved. Air can no longer leak through to the clean air side.

Clearly, in addition to the glue strips at the edges, other glue strips can be provided further inside the filter element. It is preferable, however, for the glue strips at the edges, which are responsible for forming the sealing joint, to be made thicker.

Preferably the projections extend continuously along the longitudinal direction of the filter element side to ensure that the entire side surfaces of the filter element are sealed along their whole length.

The projections, which taper from the point of their attachment to the holding frame towards the filter element, are designed like swords or fins. -With such a geometry, it is then easy to push them into the associated surfaces of the filter element.

In one preferred embodiment of the unit the holding frame comprises four profile sections located at right angles to one another, the profile sections have an essentially U-shaped cross-section with a base connecting section and two side web, the connecting section being in contact with the end side surfaces of the filter element and the webs being in contact with the walls of the filter element and the projections are present on the base section.

The four profile sections may be joined together in one piece or connected together as separate pieces to form the holding frame, preferably by clip joints. The U-shaped cross-section of the profile sections holds the filter element securely. In this way the projection on the connecting section engages with the side surfaces of the filter element at the predetermined points.

For preference, the projections are formed in one piece with the profile sections.

To enable the holding frame to be fitted into a filter housing, the holding frame is provided with supporting elements on its outside facing away from the end side surfaces, which co-operate with matching elements on the filter housing, the said supporting elements being arranged close to the projections so that they will also serve to hold and stabilise the projections in their engagement with the side surfaces of the filter element.

To fit a filter element, according to the invention, the holding frame with the filter element in it need only be inserted in the housing and clipped into place with a single hand movement, which brings the catch elements into active engagement with the detents. The holding frame is then securely held in the housing. With this type of attachment, the holding frame is also always in a predetermined position relative to the housing. The seal between the housing and the holding frame remains fully effective at all times. The exchange and replacement of the filter element is also considerably simplified. When laden with particles, the filter can be released from its attachment with a single hand movement. A new filter can then be inserted. With the air filter according to the invention, the exchange procedure takes very little time. This is an advantage, especially with large air-conditioning units, where numerous filters often have to be exchanged. Furthermore, during its release the filter is shaken very little, so trapped particles will not fall off and find their way into the air duct on the clean air side behind the filter element.

According to a preferred embodiment of the invention it is provided that the catch elements are formed in one piece on the housing, on opposite sides of the holding frame. The frame can then be inserted first into the catch element or elements on one side of the frame, and then clipped into the catches on the opposite side.

With this type of attachment, secure clamping of the holding frame is possible.

If the catch elements are formed as fins extending almost along the whole length of the associated side of the holding frame, and the fins comprise an abutment ramp inclined in the direction of the insertion movement of the holding frame, then the holding frame will be aligned over a large section along one side. It can then be reliably positioned over a sealing strip on the housing. The abutment ramp on the fins ensures that they can move accurately into the detents formed as recesses.

A preferred design of the invention provides that the housing comprises a bottom and a cover section connected to one another by the walls provided with openings, the bottom and cover sections are of trapezoid shape so that the walls are at an angle relative to one another, the walls are connected at the back by a back wall and at the front by a front wall, and the said back and front walls carry the catch elements.

It is important that the holding frame is individualised, so that exchange with the wrong type of holding frame cannot take place. This avoidance of the risk of confusion is an important factor for operational safety. For this purpose, it can be provided that the holding frame, on its side surface facing the catch elements, has longitudinal grooves which form the detents. The grooves can for example form the catch joint together with the aforementioned fins. It is also possible that several catch elements are provided on housing, which engage with a groove on a side surface of the holding frame.

In another aspect the invention provides an air filter housing and an air filter unit, wherein the housing comprises longitudinally extending catch elements in releasable engagement with supporting elements of the holding frame.

Here, it can be provided that the connector to join the ends of the profile strand is in the form of a clip component with catch projections, such that the catch projections snap into openings of the holding frame. This enables the holding frame to be assembled rapidly and accurately.

The filter element can be held securely and firmly in the holding frame if the holding frame is assembled from the profile sections, which are U-shaped in cross-section and consist of a connecting section to which are attached webs parallel to one another and some distance apart, the connecting section is provided with the detents on its outside facing away from the webs, and the edge of the filter element is fitted into the holding space surrounded by the connecting section and its webs. The filter element will then be held between the two webs, and will rest with its end surface against the connecting section. The detents, which are on the side of the connecting section facing away from the filter element, remain easily accessible.

The holding frame can be produced as a plastic injection-moulded component. For this, it could also be injection-moulded directly onto the filter element. It is also conceivable that the profile strand for the holding frame could be extruded.

To seal the holding frame against the housing, a seal may be formed or applied as foam to the holding frame, which is pressed around the opening in the wall. The seal will be held in place by the engagement between the catch elements and the detents in their locating positions on the housing. The seal could be formed as a sealing lip on the holding frame, or applied as foam to form a separate sealing bead.

If two holding frames are joined together by a hinge axis around which they can swivel, then the holding frames can be folded over one another. This gives a single unit which can be easily assembled and dismantled. If the particle-loaded sides of the filter elements are laid against one another by this swivelling mechanism, fall-out of dust particles and their penetration through to the clean air side is reliably prevented.

**Other features of the invention are set out in the dependent Claims.**

In order that the invention may be well understood it will now be described in greater detail with reference to the accompanying diagrammatic drawings in which
Figure 1 is a perspective exploded view of one filter element and a profile section of a holding frame of one embodiment of the invention;
Figure 2A to 2C show a profile strand for a holding frame, consisting of several profile sections shown in various views.
Figures 3A to 3C show a connector for the profile shown in Figures 2A to 2C.
Figure 4 shows a detail of the profile of Figures 3A to 3C ; and
Figure 5 shows in section a filter housing of the invention.

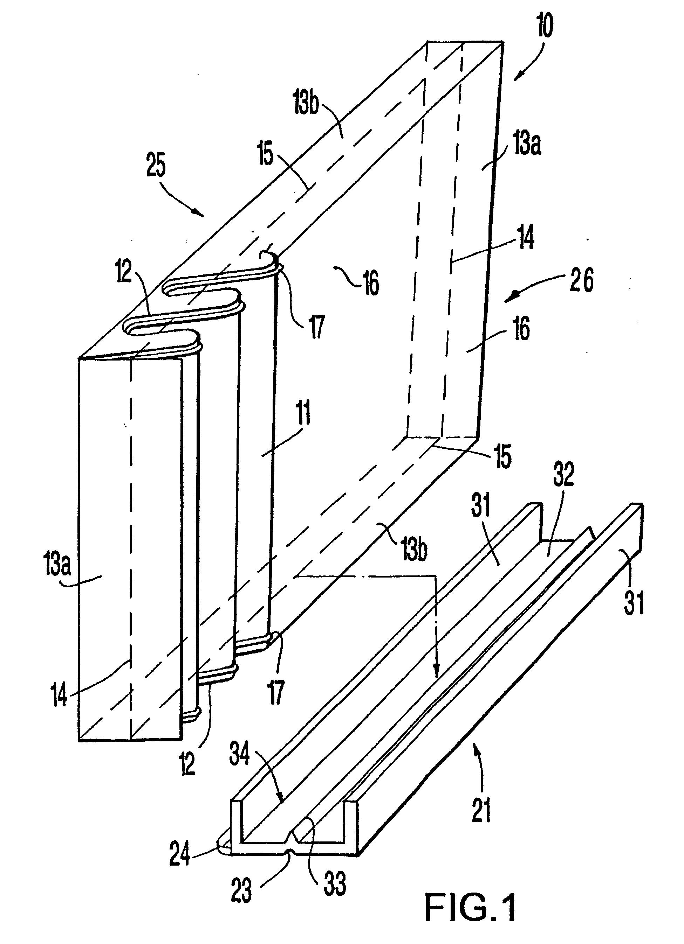

Figure 1 shows a filter element 10 consisting of filter paper folded to form individual filter laminations 11 which are essentially parallel. The front and rear filter laminations provide side surfaces 13a which extend parallel to the plane of the drawing. At right-angles to the side surfaces 13a there are side surfaces 13b. The side surfaces 13b are formed by the ends 12 of the filter laminations 11. The filter element 10 thus forms a substantially square body which separates a clean air side 25 from a working atmosphere side 26 in a filter unit.

To produce this filter element 10, glue strips 17 are applied parallel to one another on the filter paper in the longitudinal direction. When the individual filter laminations 11 are formed by folding, they stick to one another along the glue strips 17. In the drawing of Figure 1, for the sake of simplicity only two glue strips 17 are shown. These two glue strips 17 are positioned in the area of the side surfaces 13b.

To enable the filter element 10 to be fitted into the filter unit, a holding frame 20 is provided. The drawing shows only part of the said holding frame 20, namely a profile section 21. The profile section 21 is substantially U-shaped in cross-section, and is formed from a connecting section 32 and two side webs, 31. The webs 31 are distanced further apart at their points of connection to the connecting section 32 than at their free ends. The webs 31 and the connection section 32 create a holding space 34 for the filter element 10. The filter element 10 can be inserted into this holding space 34 along its side surface 13b. The webs 31 contact the wall 16 of the filter element 10, and the connecting section 32 contact with the side surface 13b. Since the two webs 31 are set at a slight angle relative to one another, the filter element 10 is clamped in place.

A projection or fin 33 is present on the connecting section 32 to face the filter element 10. The projection 33 extends longitudinally along the profile section 21. It is V-shaped in cross-section, tapering from its base at the connecting section 32 towards its free end. The projection 33 engages with the side wall 13b by penetrating into the filter element 10 along a horizontal contact line 15 as far as the glue strip 17. This engagement bends the ends 12 of the filter laminations 11. Depending on the condition of the glue strip material 17, the projection 33 may also penetrate into the glue strip 17. The height of the projection 33 is dependent on the distance from the glue strip 17 to the side wall 13b. The filter laminations 11 fold over against one another at their free ends, to produce a sealing contact between the connecting section 32 and the side wall 13b. This simple measure ensures that no atmospheric air from the working atmosphere side 26 can pass unfiltered to the clean air side 25.

The height of the projection 33 above the connecting section 32 is preferably at least equal to the distance between individual filter laminations 11 to ensure that each filter lamination 11 will be bent down far enough to lie over the end 12 of the next adjoining filter lamination 11.

In the same way, the vertical side surfaces 13a are covered by profile sections 22. The projection 33 engages in the side surface 13a to form a seal. The upper horizontal side surface 13b is also gripped by a profile section 21. The individual profile sections 21 can be made separately and joined together by connectors, or it may be a one-piece component could be used as the holding frame 20.

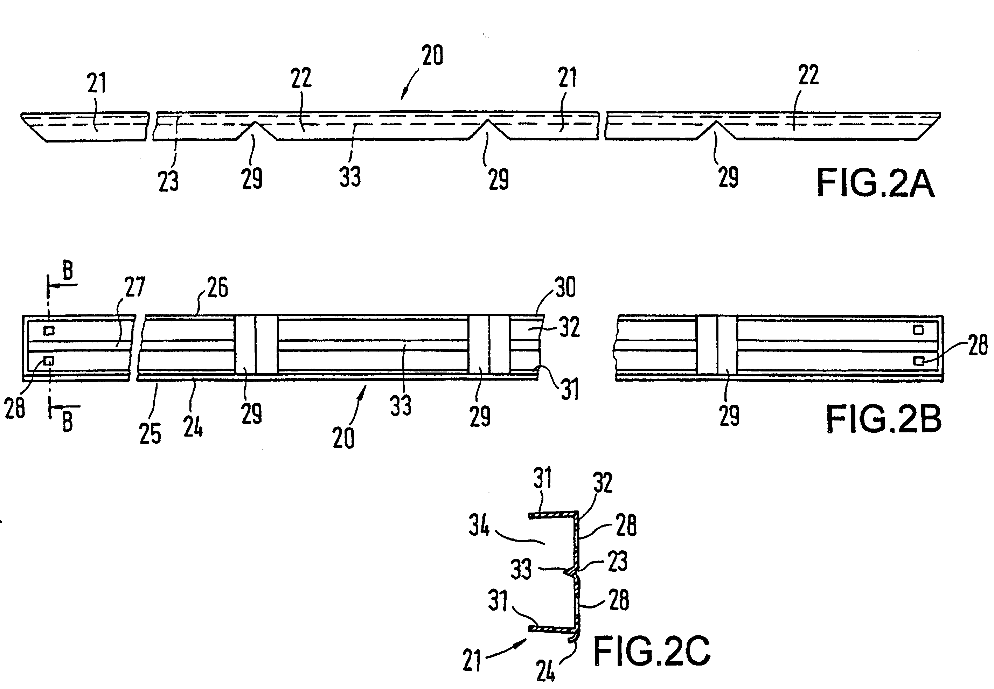

As shown in Figures 2A to 2C the individual profiles 21, 22 are joined together. For simplicity, the profile sections 21 are shown shortened. Between the individual profile sections 21, 22, cut-outs 29 are provided in the form of rectangular slots. At these, a profile section 21 can be folded over against a profile section 22. If the profile sections 21, 22 are folded against one another at all these slots 29, a closed holding frame 20 will be formed. The drawing of Figure 2B shows that the slots 29 extend across the full width of the profile strand. A continuous seal 24 is formed as a sealing lip to seal the holding frame 20 against the housing of a filtration unit. (A corresponding contact surface must be provided on the housing). Figure 2 shows that the seal 24 is positioned at the transition zone between the connecting section 32 and the lower web 31.

Supporting elements 23 are formed on the back of the connecting section 32. The supporting elements 23 extend in the form of continuous grooves on the back side of the profile sections 21, 22 to co-operate with corresponding fittings on the housing into which the holding frame is inserted. These fittings support and stabilise the projections 33 so that they are held securely against the filter element 10. At the same time, the supporting elements 23 and the projections of the housing serve to fix the holding frame 20 and hold it in place. With a definite mounting of this type, the seal 24 is also pressed against the housing in a predefined position. With this connection technique assembly is particularly simple, since it is only necessary to clip the holding frame 20 into the housing.

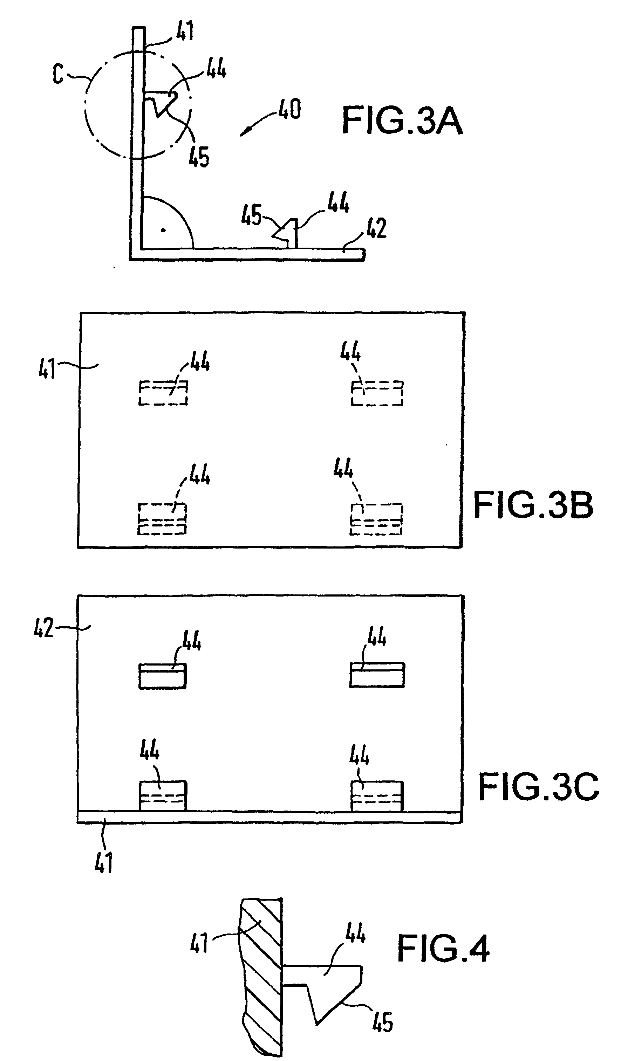

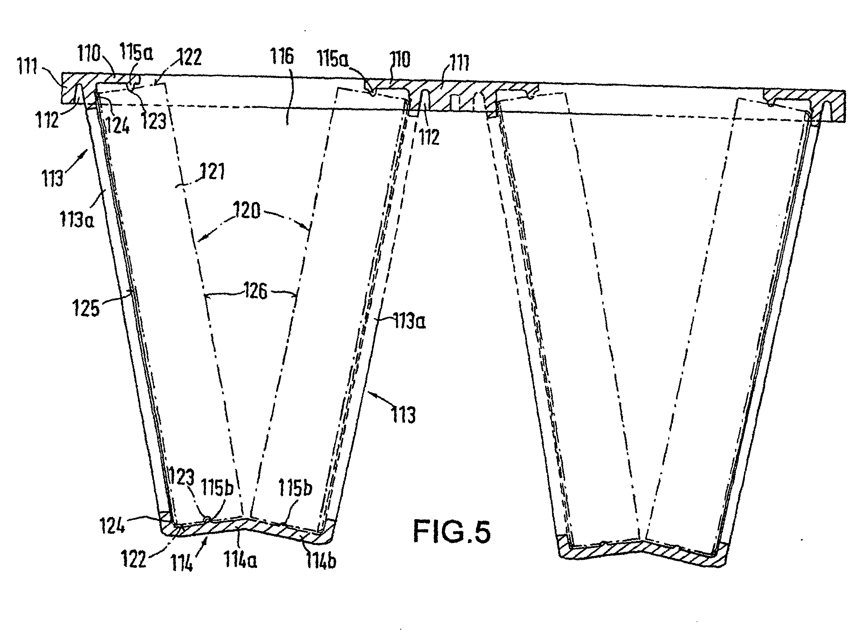

To close the holding frame 20 firmly, openings 28 are provided at the ends of the profile strand. The catch projections 44 of a connector 40 (Figures 3A to 3C and 4) can be snapped into these openings. Figure 3A shows that the connector 40 consists of two shanks 41, 42 at right-angles to one another. The shanks 41, 42 comprise catch projections 44 provided with ramps 45. The detailed design of such a catch projection can be seen more clearly in Figure 4. Figures 3B and 3C show the connector in views from behind and from above. Two catch elements 44 are used per shank. To assemble the connector 40 on the holding frame 20, the catch projections 44 are placed against the openings 28 in the profile strand. The connector 40 can now be pushed onto the holding frame 20, when the catch projections will be pushed sideways by their deflection ramps against the openings 28. When the ramps have passed through the openings 28, the catches engage with the connecting sections 32 of the profile sections 21,22.

Figure 5 shows one embodiment of assembled filter unit. The walls 113 are connected together by a bottom and a cover section 116. At the front, the housing has a front wall 110. At the back, the two walls 113 are connected to a back wall 114. The back wall 114 consists of two partial back walls 114a and 114b set at an angle to one another. Catch elements 115b are positioned on the two part back walls 114a and 114b, projecting into the housing. Catch elements 115a are also provided on the front wall 10. The catch elements 115a, 115b are formed as vertical fins running along the front wall 10 and the part back walls 114a, 114b. The catch elements 115a, 115b serve to hold filter cassettes in place.

The filter cassettes comprise a holding frame 120. In the area of the catch elements 115a,115b, the holding frame 120 is provided with a vertical groove directed longitudinally. The grooves serve as detent elements 123. A filter element is held in place in the frame 20. The holding frame 120 and its filter element cover an opening 113a in the wall 113. This separates the air exhaust side 126 from the clean air side 125. A seal 124 is present to prevent leak points where the holding frame 120 rests against the wall 113. The seal 124 is in the form of a sealing lip, a hollow sealing section or a sealing bead, and is formed in one piece on the holding frame 120. As is shown in Figure 5 the seal 124 rests against the back side of the wall 113. The distance allowed between the catch elements 115a,115b and the back side of the wall 113 is selected that the seal element 124 will always be pressed sufficiently firmly against the wall 113. This results in the reliable prevention of leakage.

For fitting into a ventilation system, the housing has a flange 111 which projects to the side, beyond the front wall 110. At the back, recesses 112 are formed in the flange 111. Sealing elements can be fitted into these recesses 112, by means of which the housing is sealed in place.

As Figure 5 also shows, two geometrically identical housings are connected together. Depending on the air entry cross-section required, as many housings as desired can be connected in series. It is also possible to connect them in a series along the direction of the plane of the drawing. With such an arrangement the air required can be drawn through the opening in the front wall 110. The particles to be separated out are captured by the filter elements. The filtered air can then pass into the air duct behind the filter element, through the openings 113a in the walls 113.

The profile strand for the holding frame 120 is co-extruded from a plastic material. It is also conceivable that the strand could be made as an injection-moulded component. The connector 144 too is an injection-moulded component.

To fit the holding frame 120 with its fitted filter element into the open housing shown in Figure 5, the holding frame 120 is first placed with one profile section 121 against the catch element 115b on the part back wall 114,114b. The holding frame 120 can then be moved towards the wall 113 by a manual movement to the side. In this, the profile section 122 slides in the area of the front wall 10 past the catch element 115a. The catch element 115a, provided with an abutment ramp, deflects the profile section 122 slightly outwards until the catch element 115a snaps into the detent 123. Now, the holding frame 120 is securely held in the housing. Dismantling is carried out in the same way. For this, the holding frame can easily be extracted again from its locked position between the catch element 115a and the detent 123.

The invention is not limited solely to the design features illustrated in the drawings. The folded paper filter can be replaced by a foam filter or any other filter element could be used. The projection 33 also need not extend continuously along the longitudinal direction of the profile sections 21, 22. Instead several projections oblique to the connecting section 32 could be provided, each displaced relative to the others. Such a design would also allow the formation of a seal between the filter element 10 and the connecting section 32.

Two holding frames 20, which are fitted adjacent to each other in the housing, could be hinged to one another along the back wall 14. A hinge axis would then be formed along the adjacent edges of the holding frames 20. This would simplify both the assembly and the dismantling of the filter consisting of filter elements and their holding frames 20. During dismantling, the filters with their particle-laden front sides could be folded together, and this would ensure that during extraction from the housing, no particles could fall out of the filter elements and reach the clean air side. To hinge the holding frames 20 together, they could be joined by a strip. It is also conceivable to have a one-piece joint, for example in the form of a film hinge.

## Claims

1. An air filter unit comprising a filter element (10) inserted in a holding frame (20;120) facing the side surfaces (13a,13b) of the filter element, the holding frame being provided with one or more projections (33) which extend substantially continuously in a longitudinal direction of the associated side surfaces (13a,13b) and taper from their base towards the filter element (10), the projections (33) being arranged to engage with the side surfaces (13a,13b) by penetrating into the filter element to form a seal between the holding frame and the filter element, the holding frame (20;120) further comprising on its outer side supporting elements (23;123) which extend in the form of longitudinal grooves adapted to co-operate with correspondingly shaped catch elements (115a, 115b) of a filter housing into which the filter unit is insertable.

2. A unit according to Claim 1, wherein the filter element (10) consists of a flat sheet section folded transversely to its length to form individual filter laminations joined together after folding by means of lines of adhesive (17) that extend in the longitudinal direction of the sheet section prior to folding the sheet, and the lines of adhesive (17) are positioned at the edges of the filter element (10) and are in sealing contact with the one or more projections (33).

3. A unit according to Claim 1 or 2, wherein the holding frame (20) comprises four profile sections (21, 22) located at right angles to one another, the profile sections (21,22) have an essentially U-shaped cross-section with a connecting base section (32) and two side webs (31), the connecting section (32) being in contact with the end side surfaces (13a, 13b) of the filter element (10) and the webs (31) being in contact with the walls (16) of the filter element (10) and the projections (33) are present on the base section (32).

4. A unit according to Claim 3, wherein the profile sections (21,22) are made of a plastic or plastic composite material and are formed together in one piece.

5. A unit according to any one of Claims 1 to 4, wherein the filter element is surrounded by horizontal and vertical profile sections (21,22, 121,122) of the holding frame (20,120), the profile sections (21,22,121,122) are connected together in one piece to form a continuous section joined at its ends by a connector (40) to produce a closed frame, and the profile sections (21,22,121,122) are provided at least in part with the apertures (28).

6. A unit according to Claim 5, wherein the connector (40) which joins the ends of the continuous section comprises a clip with detent lugs (41,42) adapted to engage in apertures (28) in the holding frame (20,120).

7. An air filter comprising a filter housing and an air filter unit according to any one of the preceding Claims, wherein the housing comprises longitudinally extending catch elements (115a,115b) in releasable engagement with supporting elements (23;123) of the holding frame (20;120).

8. An air filter according to Claim 7, wherein the catch elements (115a) are integrally formed with the housing, on opposite sides of the holding frame (120).

9. An air filter according to Claim 7 or 8, wherein the catch elements (115a) are formed as fins extending over nearly the whole length of the associated side of the holding frame (120), and are inclined in a direction corresponding to a direction of insertion movement of the holding frame (20,120) into the openings (113a).

10. An air filter according to any one of Claims 7 to 9, wherein the holding frame (120) has longitudinally directed grooves in its side surface facing the catch elements (115a) which constitute the supporting elements (23,123).

11. An air filter according to any one of Claims 7 to 10, wherein the housing (20,120) comprises a bottom and a cover section (16,116) which are connected together by walls (13,113) provided with openings (13a,113a), the bottom and cover sections (16,116) are shaped, so that the walls (13,113) lie at an angle to one another, the walls (13,113) are connected together at the back of the housing by a back wall (14,114) and at the front of the housing by a front wall (10,110), and catch elements (15a,115a) are provided on the front wall (10,110) and on the back wall (14,114).

## Patentansprüche

1. Luftfiltereinheit, aufweisend ein Filterelement (10), das in einen Halterahmen (20; 120) eingesetzt ist, der zu den Seitenflächen (13a, 13b) des Filterelements weist, wobei der Halterahmen mit einem oder mehreren Vorsprüngen (33) versehen ist, die sich im wesentlichen in Längsrichtung der zugeordneten Seitenflächen (13a, 13b) erstrecken und ausgehend von ihrer Basis in Richtung auf das Filterelement (10) verjüngt verlaufen, wobei die Vorsprünge (33) so angeordnet sind, dass sie mit den Seitenflächen (13a, 13b) durch Eindringen in das Filterelement im Eingriff stehen, um eine Dichtung zwischen dem Halterahmen und dem Filterelement zu bilden, wobei der Halterahmen (20; 120) außerdem auf seiner Außenseite Tragelement (23; 123) aufweist, die sich in Gestalt von Längsnuten erstrecken, die dazu ausgelegt sind, mit entsprechend gebildeten Einfangelementen (115a, 115b) eines Filtergehäuses zusammenzuwirken, in das die Filtereinheit einsetzbar ist.

2. Einheit nach Anspruch 1, wobei das Filterelement (10) aus einem flachen Folienabschnitt besteht, der quer zu seiner Länge gefaltet ist, um einzelne Filterschichten zu bilden, die auf den Seiten durch Klebstofflinien (17) miteinander verbunden sind, die sich vor dem Falten der Folie in der Längsrichtung des Folienabschnitts erstrecken, und wobei die Klebstofflinien (17) an den Rändern des Filterelements (10) zu liegen kommen und sich in Dichtkontakt mit dem einen oder den mehreren Vorsprüngen (33) befinden.

3. Einheit nach Anspruch 1 oder 2, wobei der Halterahmen (20) vier Profilabschnitte (21, 22) aufweist, die rechtwinklig zueinander angeordnet sind, wobei die Profilabschnitte (21, 22) im wesentlichen U-förmigen Querschnitt mit einem Basisabschnitt (32) und zwei Seitenstegen (31) aufweisen, wobei der Verbindungsabschnitt (32) in Kontakt mit dem Stirnseitenflächen (13a, 13b) des Filterelements (10) steht, wobei die Stege (31) sich in Kontakt mit den Wänden (16) des Filterelements (10) befinden, und wobei die Vorsprünge (33) auf dem Basisabschnitt (32) vorgesehen sind.

4. Einheit nach Anspruch 3, wobei die Profilabschnitte (21, 22) aus Kunststoff- oder Kunststoffverbundmaterial hergestellt und einstückig gebildet sind.

5. Einheit nach einem der Ansprüche 1 bis 4, wobei das Filterelement von horizontalen und vertikalen Profilabschnitten (21, 22, 121, 122) des Halterahmens (20, 120) umgeben ist, wobei die Profilabschnitte (21, 22, 121, 122) einstückig verbunden ist, um einen durchgehenden Abschnitt zu bilden, der an seinen Enden durch ein Verbindungselement (40) verbunden ist, um einen geschlossenen Rahmen zu erzeugen, und wobei die Profilabschnitte (21, 22, 121, 122) zumindest teilweise mit den Durchbrüchen (28) versehen sind.

6. Einheit nach Anspruch 5, wobei das Verbindungselement (40), welches die Enden des kontinuierlichen Abschnitts verbindet, eine Klammer mit Sperransätzen (41, 42) aufweist, die dazu ausgelegt sind, in Durchbrüche (28) in dem Halterahmen (20, 120) einzugreifen.

7. Luftfilter, aufweisend ein Filtergehäuse und eine Luftfiltereinheit, nach einem der vorangehenden Ansprüche, wobei das Gehäuse sich in Längsrichtung erstreckende Einfangelemente (115a, 115b) in lösbarem Eingriff mit den Tragelementen (23, 123) des Halterahmens (20; 120) aufweist.

8. Einheit nach Anspruch 7, wobei die Einfangelemente (115a) mit dem Gehäuse auf gegenüberliegenden Seiten des Halterahmens (120) integral gebildet sind.

9. Einheit nach Anspruch 7 oder 8, wobei die Einfangelemente (115a) als Rippen gebildet sind, die sich über nahezu die gesamte Länge der zugeordneten Seite des Halterahmens (120) erstrecken und in einer Richtung entsprechend einer Einführbewegungsrichtung des Halterahmens (20, 120) in die Öffnungen (113a) geneigt verlaufen.

10. Einheit nach einem der Ansprüche 7 bis 9, wobei der Halterahmen (120) in Längsrichtung gerichtete Nuten in seiner Seitenfläche aufweist, die zu den Einfangelementen (115a) weist, welche die Tragelemente (23, 123) bilden.

11. Luftfilter nach einem der Ansprüche 7 bis 10, wobei das Gehäuse (20, 120) einen Boden- und einen Abdeckabschnitt (16, 116) aufweist, die durch Wände (13, 113) verbunden sind, die mit Öffnungen (13a, 113a) versehen sind, wobei die Boden- und Abdeckabschnitte (16, 116) derart geformt sind, dass die Wände (13, 113) unter einem Winkel zueinander liegen, wobei die Wände (13, 113) auf der Rückseite des Gehäuses durch eine hintere Wand (14, 114) und an der Vorderseite des Gehäuses durch eine Vorderwand (10, 110) verbunden sind, und wobei die Einfangelemente (15, 115a) auf der Vorderwand (10, 110) und der hinteren Wand (14, 114) vorgesehen sind.

## Revendications

1. Dispositif de filtre à air comprenant un élément filtrant (10) inséré dans un cadre de fixation (20 ; 120) faisant face aux surfaces latérales (13a, 13b) de l'élément filtrant, le cadre de fixation présentant une ou plusieurs saillies (33) qui s'étendent de manière sensiblement continue dans une direction longitudinale des surfaces latérales associées (13a, 13b) et s'effilent depuis leur base vers l'élément filtrant (10), les saillies (33) étant agencées de sorte à se mettre en prise avec les surfaces latérales (13a, 13b) en pénétrant dans l'élément filtrant pour former un joint entre le cadre de fixation et l'élément filtrant, le cadre de fixation (20 ; 120) comprenant en outre sur son côté externe, des éléments de support (23 ; 123) qui s'étendent sous la forme de rainures longitudinales conçues pour coopérer avec des éléments d'accrochage de forme correspondante (115a, 115b) d'un logement de filtre dans lequel est insérable le dispositif de filtre.

2. Dispositif selon la revendication 1, dans lequel l'élément filtrant (10) comprend une section de feuille plane pliée dans le sens transversal par rapport à sa longueur pour former des lamelles de filtre individuelles assemblées après pliage au moyen de lignes d'adhésif (17) qui s'étendent dans la direction longitudinale de la section de feuille avant pliage de la feuille, et les lignes d'adhésif (17) sont positionnées au niveau des bords de l'élément filtrant (10) et sont en contact étanche avec la ou les saillies (33).

3. Dispositif selon la revendication 1 ou 2, dans lequel le cadre de fixation (20) comprend quatre sections de profil (21, 22) situées à des angles droits l'une par rapport à l'autre, les sections de profil (21, 22) ont essentiellement une section transversale en forme de U avec une section de base d'accouplement (32) et deux âmes latérales (31), la section d'accouplement (32) étant en contact avec les surfaces latérales d'extrémité (13a, 13b) de l'élément filtrant (10) et les âmes (31) étant en contact avec les parois (16) de l'élément filtrant (10) et les saillies (33) sont présentes sur la section de base (32).

4. Dispositif selon la revendication 3, dans lequel les sections de profil (21, 22) sont constituées d'un matériau plastique ou plastique composite et sont formées ensemble d'un seul tenant.

5. Dispositif selon l'une quelconque des revendications 1 à 4, dans lequel l'élément filtrant est entouré par des sections de profil horizontales et verticales (21, 22, 121, 122) du cadre de fixation (20, 120), les sections de profil (21, 22, 121, 122) étant accouplées ensemble d'un seul tenant pour former une section continue assemblée à ses extrémités par une pièce de jonction (40) afin d'obtenir un cadre fermé, et les sections de profil (21, 22, 121, 122) étant pourvues au moins en partie des ouvertures (28).

6. Dispositif selon la revendication 5, dans lequel la pièce de jonction (40) qui assemble les extrémités de la section continue comprend une attache avec des pattes d'arrêt (41, 42) conçues pour se mettre en prise avec les ouvertures (28) dans le cadre de fixation (20, 120).

7. Filtre à air comprenant un logement de filtre et un dispositif de filtre à air selon l'une quelconque des revendications précédentes, dans lequel le logement comprend des éléments d'accrochage s'étendant longitudinalement (115a, 115b) en prise de façon détachable avec les éléments de support (23, 123) du cadre de fixation (20, 120).

8. Filtre à air selon la revendication 7, dans lequel les éléments d'accrochage (115a) sont intégralement formés avec le logement, sur les côtés opposés du cadre de fixation (120).

9. Filtre à air selon la revendication 7 ou 8, dans lequel les éléments d'accrochage (115a) sont sous la forme d'ailettes s'étendant sur la quasi-totalité de la longueur du côté associé du cadre de fixation (120) et sont inclinés dans une direction correspondant à une direction de mouvement d'insertion du cadre de fixation (20, 120) dans les ouvertures (113a).

10. Filtre à air selon l'une quelconque des revendications 7 à 9, dans lequel le cadre de fixation (120) possède des rainures orientées longitudinalement dans sa surface latérale faisant face aux éléments d'accrochage (115a) qui constituent les éléments de support (23, 123).

11. Filtre à air selon l'une quelconque des revendications 7 à 10, dans lequel le logement (20, 120) comprend une section inférieure et une section de couverture (16, 116) qui sont accouplées ensemble par des parois (13, 113) présentant des ouvertures (13a, 113a), les sections inférieure et de couverture (16, 116) sont formées de telle sorte que les parois (13, 113) se trouvent à un angle l'une de l'autre, les parois (13, 113) sont accouplées ensemble à l'arrière du logement par une paroi arrière (14, 114) et à l'avant du logement par une paroi avant (10, 110) et des éléments d'accrochage (15a, 115a) sont situées sur la paroi avant (10, 110) et sur la paroi arrière (14, 114).
